# EUROPEAN PATENT APPLICATION

(11) **EP 1 698 659 A1**
(43) Date of publication of application: **06.09.2006**
(21) Application number: 04821016.5
(22) Date of filing: 10.12.2004
(51) Int. Cl.: C08L 23/02, C08J 3/24

(54) **THERMOPLASTIC ELASTOMER COMPOSITION AND MOLDED ARTICLE THEREOF**

(30) Priority: 26.12.2003 JP 2003433855
(71) Applicant: JSR Corporation, Tokyo 104-8410 (JP)
(72) Inventor: KANAE, Kentarou, c/o JSR Corporation, Tokyo 1048410 (JP); NAKANISHI, Hideo, c/o JSR Corporation, Tokyo 1048410 (JP); KOBAYASHI, Masato, c/o JSR Corporation, Tokyo 1048410 (JP); KOUJINA, Junji, c/o JSR Corporation, Tokyo 1048410 (JP)
(74) Representative: TBK-Patent
(86) International application number: PCT/JP2004/018476
(87) International publication number: WO 2005/066263

(57) **Abstract**

There is provided a thermoplastic elastomer composition including an ethylene/α-olefin copolymeric rubber (A1) or an extended rubber (X) comprising an ethylene/α-olefin copolymeric rubber (A2) and a mineral oil softener (E2), and a thermoplastic α-olefin resin (B) comprising a α-olefinic crystalline thermoplastic resin (B1) and/or a α-olefinic amorphous thermoplastic resin (B2), an unmodified organopolysiloxane (C), a viny-terminated organopolysiloxane (D), and a mineral oil softener (E1); and molded article produced by forming the thermoplastic elastomer composition. There is provided a thermoplastic elastomer composition and a molded article thereof having excellent molding appearance by imparting an initial sliding ability with an organopolysiloxane having low viscosity and by adding a crosslinked vinylated organopolysiloxane to a thermoplastic elastomer composition to exhibit durable abrasion resistance (long term sliding ability).

## Description

### TECHNICAL FIELD

The present invention relates to a dynamic crosslinking type thermoplastic elastomer composition and a molded article thereof having excellent sliding ability, abrasion resistance, and molding appearance, where silicone oil having low viscosity and vinylated silicone rubber are added.

### BACKGROUND ART

There has widely been known a thermoplastic elastomer composition besides a rubber material as a polymer material excellent in flexibility and rubber elasticity.

Among them, as a thermoplastic elastomer composition, there are disclosed an olefin-based thermoplastic elastomer composition obtained by adding an organopolysiloxane and aliphatic amide to an olefin-based thermoplastic elastomer (see Patent Document 1) and an olefin-based thermoplastic elastomer composition obtained by using an acrylic modified organopolysiloxane and higher fatty acid and/or higher fatty acid amide in addition to an olefin-based thermoplastic elastomer (see Patent Document 2). However, both of them have insufficient sliding ability, and a problem of bad appearance may arise because of blooming white caused by fatty acid amide.

There is also disclosed an olefin-based thermoplastic elastomer composition obtained by adding an organopolysiloxane having a viscosity of 10 or more and below 10⁶ cSt and an organopolysiloxane having a viscosity of 10⁶ to 10⁸ cSt (see Patent Document 3). Though it has good sliding ability because a large amount of organopolysiloxane is added, a problem of bad molding appearance may arise because organopolysiloxane bleeds out on the surface of the mold upon injection molding.
Patent Document 1: JP-A-2000-26668
Patent Document 2: JP-A-2000-143884
Patent Document 3: JP-A-2000-95900

### DISCLOSURE OF THE INVENTION

The present invention has been made in view of the aforementioned conventional problems and aims to provide a thermoplastic elastomer composition and a molded article thereof having excellent molding appearance by imparting an initial sliding ability with an organopolysiloxane having low viscosity and by adding a crosslinked vinylated organopolysiloxane to a thermoplastic elastomer composition to exhibit durable abrasion resistance (long term sliding ability).

According to the present invention, there is provided a thermoplastic elastomer composition comprising:
40 to 99 parts by mass of an ethylene/α-olefin copolymeric rubber (A1), and
1 to 60 parts by mass of a thermoplastic α-olefin resin (B) comprising a α-olefinic crystalline thermoplastic resin (B1) and/or a α -olefinic amorphous thermoplastic resin (B2), provided that a total amount of (A1) and (B) is 100 parts by mass; and
0.1 to 10 parts by mass of an unmodified organopolysiloxane (C),
0.1 to 10 parts by mass of a viny-terminated organopolysiloxane (D), and
0 to 400 parts by mass of a mineral oil softener (E1), to 100 parts by mass of a mixture of (A1) and (B).
In the above thermoplastic elastomer composition, it is preferable that at least the ethylene/α-olefin copolymeric rubber (A1) and the thermoplastic α-olefin resin (B) are subjected to a dynamic heat treatment under the presence of a crosslinking agent.

According to the present invention, there is also provided a thermoplastic elastomer composition comprising:
40 to 99 parts by mass of an extended rubber (X) comprising 20 to 80% by mass of an ethylene/α-olefin copolymeric rubber (A2) and 20 to 80% by mass of a mineral oil softener (E2), provided that total of (A2) + (E2) is 100% by mass; and
1 to 60 parts by mass of a thermoplastic α-olefin resin (B) comprising a α-olefinic crystalline thermoplastic resin (B1) and/or a α -olefinic amorphous thermoplastic resin (B2),
Provided that total of a mixture of (X) and (B) is 100 parts by mass; and
0.1 to 10 parts by mass of an unmodified organopolysiloxane (C),
0.1 to 10 parts by mass of a viny-terminated organopolysiloxane (D), and
0 to 300 parts by mass of a mineral oil softener (E1), to 100 parts by mass of the mixture of (X) and (B).
In the above thermoplastic elastomer composition, it is preferable that at least the extended rubber (X) and the thermoplastic α-olefin resin (B) are subjected to a dynamic heat treatment under the presence of a crosslinking agent.

In the present invention, it is preferable that the above ethylene/α-olefin copolymeric rubbers (A1) and (A2) have a critical viscosity [η] of 3.5 to 6.8 dl/g when it is measured at 135°C in a decalin solvent. In addition, it is preferable that the unmodified organopolysiloxane (C) has a viscosity of below 100,000 cSt when it is measured at 25°C based on JIS K2283.
It is further preferable that the viny-terminated organopolysiloxane (D) is an organopolysiloxane having a polymerization degree of 500 to 10,000 and represented by the following average composition formula (1):

RₐSiO_{(4-a)/2}

where R represents a substituted or unsubstituted mono-valent organic group, 0.02 to 10 mol% of R is a vinyl group, and a is a number within the range from 1.900 to 2.004.

According to the present invention, there is further provided a weather strip produced by subjecting the aforementioned thermoplastic elastomer composition to injection molding.

According to the present invention, there can be obtained a thermoplastic elastomer composition excellent in processability capable of easily processing the composition by injection molding, extrusion molding, compression molding, vacuum molding, lamination molding, calender molding, or the like, and excellent in molding appearance. In addition, there is no bleeding of a softener, and a thermoplastic elastomer composition excellent in flexibility, rubber elasticity (compression set), and durable sliding ability can be obtained. Further, a thermoplastic elastomer composition excellent in injection weldability can also be obtained.

### BEST MODE FOR CARRYING OUT THE INVENTION

Embodiments of the present invention will hereinbelow be described concretely.
The first embodiment of a thermoplastic elastomer composition of the present invention contains an ethylene/α-olefin copolymeric rubber (A1), a thermoplastic α-olefin resin (B), an unmodified organopolysiloxane (C), a viny-terminated organopolysiloxane (D), and a mineral oil softener (E1). The second embodiment contains an extended rubber (X), a thermoplastic α-olefin resin (B), an unmodified organopolysiloxane (C), a viny-terminated organopolysiloxane (D), and a mineral oil softener (E1).

In addition, in the first embodiment, it is a thermoplastic elastomer composition where the ethylene/α-olefin copolymeric rubber (A1) and the thermoplastic α-olefin resin (B) are preferably subjected to a dynamic heat treatment under the presence of a crosslinking agent. In the second embodiment, it is a thermoplastic elastomer composition where the extended rubber (X) and the thermoplastic α-olefin resin (B) are preferably subjected to a dynamic heat treatment under the presence of a crosslinking agent.

The present invention is hereinbelow described more concretely by each element. (A; A₁, A₂) Ethylene/α-olefin copolymeric rubber:
The ethylene/α-olefin copolymeric rubber (A) (hereinbelow sometimes simply referred to a "EAO copolymer (A)") is a copolymer containing, as the main component, ethylene and α-olefin having 3 to 10 carbon atoms except for ethylene. When the total of ethylene and α-olefin contained in the EAO copolymer is 100 mol%, the ethylene content is preferably 50 to 90 mol%. When the ethylene content is above 90 mol%, flexibility is prone to be insufficient. When it is below 50 mol%, mechanical strength is prone to be insufficient. These are not preferable.

Examples of the α-olefin having 3 to 10 carbon atoms include propylene, 1-butene, 1-pentene, 4-methyl-pentene-1, 1-hexene, 1-heptene, and 1-octane, 1-decene. Of these, propylene, 1-butene, 1-hexene, and 1-octane are preferable, and propylene and 1-butene are further preferable. These compounds can be used alone or in combination of two or more kinds. Use of α-olefin having 3 to 10 carbon atoms gives good copolymerization ability of the α-olefin with the other monomer.
A component unit derived from α-olefin preferably occupies 5 to 50 mol% in EAO copolymer (A), more preferably 10 to 45 mole, and particularly preferably 15 to 40 mole%. When it is below 5 mol%, it is sometimes difficult to obtain rubber elasticity required as a thermoplastic elastomer. On the other hand, when it is above 50 mole%, the resultant elastomer sometimes has low durability.

Further, the EAO copolymer (A) may contain 0 to 10 mol% of non-conjugate diene as necessary. When the proportion of the non-conjugated diene is more than 10 mole%, the resultant elastomer sometimes has low durability.
Examples of the non-conjugated diene include straight chain acyclic dienes such as 1,4-hexadiene, 1,6-hexadiene, and 1,5-hexadiene; branched chain acyclic dienes such as 5-methyl-1,4-hexadien, 3,7-dimethyl-1,6-octadiene, 5,7-diethylocta-1,6-diene, 3,7-dimethyl-1,7-octadiene, 7-methylocta-1,6-diene, and dihydromyrcene; and alicyclic dienes such as tetrahydroindene, methyltetrahydroindene, dicyclopentadiene, bicyclo[2.2.1]-hepta-2,5-diene, 5-methylene-2-norbornene, 5-ethylidene-2-norbornene, 5-propenyl-2-norbornene, 5-isopropylidene-2-norbornene, 5-cyclohexylidene-2-norbornene, and 5-vinyl-2-norbornene.

These compounds may be used alone or in combination of two or more kinds. Of the above non-conjugated dienes, 1-4-hexadiene, dicyclopentadiene, and 5-ethylidene-2-norbornene are preferable.

These EAO copolymers (A1) have a critical viscosity [η] of 3.5 or more (preferably 4.0 dl/g or more, and more preferably 4.3 dl/g or more) when it is measured at 135°C in a decalin solvent. When the critical viscosity is below 3.5 dl/g, the thermoplastic elastomer composition tends to have deteriorated rubber elasticity. When it is above 6.8 dl/g, molding processability tends to deteriorate. These are not preferable.

In the present invention, there may be employed as the EAO copolymer (A), besides the above binary or terpolymer s, halogenated copolymers where a part of a hydrogen atom is substituted by a halogen atom such as a chlorine atom, a bromine atom, or the like, or graft copolyers where an unsaturated monomer such as vinyl chloride, vinyl acetate, (meta)acrylic acid, derivatives of methacrylic acid [methyl methacrylate, glycidyl methacrylate, amide methacrylate, etc.], maleic acid, derivatives of maleic acid (maleic anhydride, maleimide, dimethyl maleate, etc.), and conjugated dienes (butadiene, isoprene, chloroprene, etc.) is graft polymerized to the above binary or terpolymer s, or halogenated copolymers. These copolymers can be used alone or in combination of two or more kinds.

Incidentally, the EAO copolymer (A1) used in the first embodiment of the present invention is substituted with an extended rubber (X) obtained by adding a mineral oil softener (E2) to an EAO copolymer (A2) in the second embodiment.
When an extended rubber (X) is thus used instead of the EAO copolymer (A1), there is a tendency for a mineral oil softener not to bleed out from the thermoplastic elastomer composition.
In the extended oil (X), each of the proportions of EAS copolymer (A2) and the mineral oil softener (E2) is 20 to 80% by mass, preferably 25 to 75% by mass, more preferably 30 to70% by mass.

The above EAO copolymer (A) can be obtained by a middle/low pressure polymerization method such as a method where α-olefin and a conjugated diene are polymerized under the presence of a catalyst having a solvent containing a Ziegler-Natta catalyst, a soluble vanadium compound, and an organic aluminum compound with feeding hydrogen as a regulator as necessary. The polymerization can be performed by a vapor-phase polymerization (fluidized bed or stirred bed) or a liquid-phase polymerization (slurry polymerization or solution polymerization).

As the above soluble vanadium compound, it is preferable to use, for example, a reaction product of at least one of VOCl₃ and VCl₄ with alcohol. Examples of the alcohol include methanol, ethanol, n-propanol, isopropanol, n-butanol, sec-butanol, t-butanol, n-hexanol, n-octanol, 2-ehylhexanol, n-decanol and n-dodecanol. Of these, an alcohol having 3 to 8 carbon atoms can suitably be used.

Examples of the above organic aluminum compound include triethylaluminum, triisobutylaluminum, tri-n-hexylaluminum, diethylaluminum monochloride, diisobutylaluminum monochloride, ethylaluminum sesquichloride, butylaluminum sesquichloride, ethylaluminum dichloride, butylaluminum dichloride, or trimethylaluminoxane, which is a reaction product of trimethylaluminum with water. Among these, are preferably used ethylaluminum sesquichloride, a mixture of ethylaluminum sesquichloride and triisobutylaluminum, a mixture of triisobutylaluminum and butylaluminum sesquichloride.

Further, as the above solvent, hydrogen carbides are suitable used. Among them, are preferably used n-pentane, n-hexane, n-heptane, n-octane, isooctane, and cyclohexane. They may be used alone or a combination of two or more kinds.

Incidentally, the EAO copolymer (A1) and the extended rubber (X) may have any form selected from bale, crumb, pellet, powder (including grinded bale). An EAO copolymer and an extended rubber having different forms may be blended.

(B; B1, B2) α-olefin resin:
Examples of the α-olefin resin used in the present invention include crystalline α-olefin resins (B1) and noncrystalline thermoplastic α-olefin resins (B2).

Though the above crystalline α-olefin resin (B1) (hereinbelow sometimes simply referred to as a "crystalline polymer (B1)") is not particularly limited, one having α-olefin as the main component is preferably used. That is, when the whole crystalline polymer (B1) is 100 mol%, it preferably contains α-olefin of 80 mole% or more (more preferably 90% or more). The above crystalline polymer (B1) may be a homopolymer of an α-olefin, a copolymer of two or more kinds of α-olefins, or a copolymer with a monomer other than α-olefin. It may be a mixture of a polymer and/or a copolymer of the above two or more kinds.

As the α-olefin constituting the above crystalline polymer (B1), an α-olefin having 2 or more carbon atoms is preferably used, and an α-olefin having 2 to 12 carbon atoms is more preferably used.

Examples of α-olefin include α-olefins having 2 to 12 carbon atoms such as ethylene, propene (hereinbelow referred to as "propylene"), 1-butene, 1-pentene, 3-methyl-1-butene, 1-hexene, 3-methyl-1-pentene, 4-methyl-1-pentene, 3-ethyl-1-pentene, 1-octene, 1-decene, and 1-undecene. They may be used alone or in combination of two or more kinds. Of these, there may preferably be used organic peroxide degradable propylene and/or 1-butene.

When a polymer constituting the above crystalline polymer (B1) is a copolymer, the copolymer may be a random copolymer or a block copolymer. However, in order to obtain the degree of crystallinity described below, it is preferable to make the total proportion of components except for α-olefin 15 mol% or less (more preferably 10 mol% or less) in a random copolymer when the whole random copolymer is 100 mol%. In a block copolymer, it is preferable to make the total proportion of component for α-olefin 40 mol% or less (more preferably 20 mol% or less) when the whole block copolymer is 100 mol%.

The above random copolymer can be obtained by a middle/low pressure polymerization method such as a method where α-olefin is polymerized under the presence of a catalyst having a solvent containing a Ziegler-Natta catalyst, a soluble vanadium compound, and an organic aluminum compound with feeding hydrogen as a regulator as necessary. The polymerization can be performed by a vapor-phase polymerization (fluidized bed or stirred bed) or a liquid-phase polymerization (slurry polymerization or solution polymerization).

As the above soluble vanadium compound, it is preferable to use, for example, a reaction product of at least one of VOCl₃ and VCl₄ with alcohol. Examples of the alcohol include methanol, ethanol, n-propanol, isopropanol, n-butanol, sec-butanol, t-butanol, n-hexanol, n-octanol, 2-ehylhexanol, n-decanol and n-dodecanol. Of these, an alcohol having 3 to 8 carbon atoms can suitably be used.

Examples of the above organic aluminum compound include triethylaluminum, triisobutylaluminum, tri-n-hexylaluminum, diethylaluminum monochloride, diisobutylaluminum monochloride, ethylaluminum sesquichloride, butylaluminum sesquichloride, ethylaluminum dichloride, butylaluminum dichloride, or trimethylaluminoxane, which is a reaction product of trimethylaluminum with water. Among these, are preferably used ethylaluminum sesquichloride, a mixture of ethylaluminum sesquichloride and triisobutylaluminum, a mixture of triisobutylaluminum and butylaluminum sesquichloride.

Further, as the above solvent, hydrogen carbides are suitable used. Among them, are preferably used n-pentane, n-hexane, n-heptane, n-octane, isooctane, and cyclohexane. They may be used alone or a combination of two or more kinds.
A block copolymer as described above can be obtained by living polymerization using a Ziegler-Natta catalyst.

The above crystalline polymer (B1) has crystallinity with a preferable degree of crystallinity of 50% or more (more preferably 53% or more, furthermore preferably 55% or more) measured by an X-ray diffraction. A degree of crystallinity is closely related to a density. For example, in the case of polypropylene, an α-type crystal (monoclinic system) has a density of 0.936 g/cm³, a smectic type microcrystal (pseudohexagonal system) has a density of 0.886 g/cm³, and an amorphous (atactic) component has a density of 0.850 g/cm³. Further, in the case of poly-1-butane, an isotactic crystal component has a density of 0.91 g/cm³, and an amorphous (atactic) component has a density of 0.87 g/cm³.

Therefore, in order to obtain a crystalline polymer (B1) having a degree of crystallinity of 50% or more, the density is preferably 0.89 g/cm³ or more (more preferably 0.90 to 0.94 g/cm³). When the degree of crystallinity is below 50% and the density is below 89 g/cm³, thermal resistance and mechanical strength tend to be lowered.

Further, the maximum peak temperature of the above crystalline polymer by a differential scanning calorimetry, that is, the melting point (hereinbelow simply referred to as a "Tm") is preferably 100°C or more (more preferably 120°C or more). When the Tm is below 100°C, sufficient thermal resistance and strength tend not to be exhibited. In addition, the above Tm is preferably 120°C or more though it depends on a monomer to be constituted.

In addition, its melt flow rate (hereinbelow simply referred to as a "MFR")(at 230°C under a load of 21N) is 0.1 to 1,000 g/10 min. (preferably 0.5 to 500 g/10 min., and more preferably 1 to 100 g/10 min.). When the MFR is below 0.1 g/10 min., kneading processability, extrusion processability, or the like, of the elastomer composition may be insufficient. On the other hand, when the MFR is above 1,000 g/10 min., strength tends to be lowered.

Therefore, as the above crystalline polymer (B1), it is particularly preferable to use polypropylene and/or a copolymer of propylene and ethylene with a degree of crystallinity of 50% or more, density of 0.89 g/cm³ or more, content of an ethylene unit of 20 mol% or less, Tm of 100°C or more, MFR of 0.1 to 100 g/10 min., and melting point of 140 to 170°C.

Though the above amorphous polyolefin resin (B2) (hereinbelow sometimes simply referred to as an "amorphous polymer (B2)") in the above α-olefin resins (B) is not particularly limited, one having α-olefin as the main component is preferably used. The above amorphous polyolefin resin (B2) may be a homopolymer of an α-olefin, a copolymer of two or more kinds of α-olefins, or a copolymer with a monomer other than α-olefin. It may be a mixture of a polymer and/or a copolymer of the above two or more kinds.
As the α-olefin constituting the above amorphous polymer (B2), an α-olefin having 3 or more carbon atoms is preferably used, and an α-olefin having 3 to 12 carbon atoms similarly to the examples in the above crystalline polymer (B1) is more preferably used.

Examples of the above amorphous polymer (B2) include homopolymers such as atactic polypropylene, atactic poly-1-butene; copolymers of propylene (content of 50 mol% or more) with another α-olefins (ethylene, 1-butene, 1-pentene, 1-hexene, 4-methyl-1-pentene, 1-octene, 1-decene, etc.); and copolymers of 1-butene (content of 50 mol% or more) with another α-olefins (ethylene, propylene, 1-pentene, 1-hexene, 4-methyl-1-pentene, 1-octene, 1-decene, etc.).

When a polymer constituting the above crystalline polymer (B2) is a copolymer, the copolymer may be a random copolymer or a block copolymer. However, in the case of a block copolymer, the α-olefin unit functioning as the main component (propylene and 1-butane in the above copolymer) needs to be bonded in an atactic structure. When the above amorphous copolymer (B2) is a copolymer of an α-olefin having 3 or more carbon atoms with ethylene, the proportion of the α-olefin with respect to 100 mol% of the whole copolymer is preferably 50 mol% or more (more preferably 60 to 100 mol%).

As the amorphous polymer (B2), it is particularly preferable to use a copolymer of atactic polypropylene (propylene content of 50 mol% or more) or propylene (50 mol% or more) with ethylene, or a copolymer of propylene with 1-butene.
Incidentally, this atactic polypropylene can be obtained as a by-product of polypropylene which can be used as the above crystalline polymer (B1).
Atactic polypropylene and atactic poly-1-butene can be obtained also by polymerization using zirconocene compound-methylaminoxane catalyst.
Further, the above random copolymer can be obtained by a method similar to that for the above crystalline copolymer (B1). In addition, the above block copolymer can be obtained by living polymerization using a Ziegler-Natta catalyst.

In addition, in the above amorphous copolymer (B2), the degree of crystallinity by X-ray diffraction is preferably below 50% (more preferably 30% or less, and furthermore preferably 20& or less). The degree of crystallinity closely relates to the density as in the above and is preferably 0.85 to 0.89 g/cm³ (more preferably 0.85 to 0.88 g/cm³).

With regard to a compounding ratio of each of the ethylene/α-olefin copolymeric rubbers (A, A1, A2) and the α-olefin resin (B) or a compounding ratio of the extended rubber (X) and the α-olefin resin (B), each of the ethylene/α-olefin copolymeric rubbers (A, A1, A2) or the extended rubber (X) is contained generally 40 to 99 parts by mass, preferably 45 to 95 parts by mass, with respect to the 100 parts by mass of total amount of a mixture of the thermoplastic elastomer [total amount of (A1) and (B) or total amount of (X) and (B)], and the α-olefin resin (B) is contained generally 1 to 60 parts by mass, and preferably 5 to 55 parts by mass.
When the ratio is without the above range, that is, when the ratio of the α-olefin resin (B) is below 1 parts by mass, the phase structure (morphology) of the resultant thermal elastomer composition does not become a satisfactory sea-island structure [olefin resin constituting a sea (matrix) and closslinked rubber constituting an island(domain)], and molding processability, mechanical properties, and flowability is prone to deteriorate. On the other hand, when the ratio of the α-olefin resin (B) is above 60 parts by mass, flexibility and rubber elasticity of the resultant thermoplastic elastomer composition are lowered, which is not preferable.

(C) Unmodified organopolysiloxane:
The unmodified organopolysiloxane (C) used in the present invention is not particularly limited, and Examples of the unmodified organopolysiloxane (C) include dimethylpolysiloxane, methylphenylpolysiloxane, fluoropolysiloxane, tetramethyltetraphenylpolysiloxane, and methylhydrodienepolysiloxane. Of these, dimethylpolysiloxane is preferably used.

The above unmodified organopolysiloxane (C) preferably has a viscosity measured at 25°C based on JIS K2283 of below 100,000 cSt, more preferably below 70,000 cSt, particularly preferably below 50,000 cSt.
A compounding ratio of the above unmodified organopolysiloxane (C) is 0.1 to 10 parts by mass, preferably 1 to 8 parts by mass, more preferably 1 to 5 parts by mass with respect to 100 parts by mass of a mixture of the thermoplastic elastomer [total amount of (A1) and (B) or total amount of (X) and (B)]. When the ratio of the above unmodified organopolysiloxane (C) is below 0.1 parts by mass, the initial sliding ability tends to be lowered. When it is above 10 parts by mass, molding appearance tends to be inferior, or bleeding out tends to be caused.
Incidentally, when a viscosity measured at 25°C based on JIS K2283 is above 100,000 cSt, the initial sliding ability tends to be lowered, which is not preferable.

The above unmodified organopolysiloxane (C) may be subjected to a dynamic heat treatment and kneading under the presence of a crosslinking agent together with an EAO copolymer (A), an α-olefin resin (B) and/or a mineral oil softener (E1) or may be subjected to dynamic melting and kneading under the presence of a crosslinking agent, followed by another melting and kneading to add. There is no limitation on an addition method.

(D) vinylated organopolysiloxane:
A viny-terminated organopolysiloxane (D) used in the present invention is preferably an organopolysiloxane having a polymerization degree of 500 to 10,000 and represented by the following average composition formula (1):

   RₐSiO_{(4-a)/2}

   where R represents a substituted or unsubstituted mono-valent organic group, 0.02 to 10 mol% of R is a vinyl group, and a is a number within the range from 1.900 to 2.004.

A viny-terminated organopolysiloxane (D) used in the present invention is preferably in the form of a straight chain having the above average composition formula. It may have a form of a branched chain or a three-dimensional structure at its part, or it may be a monomer, copolymer, or a mixture of them. Example of the substituted or unsubstituted mono-valent organic group include methyl group, ethyl group, propyl group, vinyl group, phenyl group, and a halogen-substituted hydrocarbon group of them. Necessarily, 0.02 to 10 mol% (preferably 0.05 to 5 mol%) of the organic group directly bonded to a silicon atom in the molecule is a vinyl group. When the amount of the vinyl group is too small, reaction with the crosslinking agent described below is not sufficient, and therefore, durable abrasion resistance of the thermoplastic elastomer composition tends to deteriorate. When it is too large, crosslinking reaction proceeds rapidly, and therefore, the kneading condition is uneven, which affects properties of the above composition, which is not preferable.

The value of a in the above formula is 1.900 to 2.004, and preferably 1.950 to 2.002. When it is below 1.900, excellent mechanical strength and thermal resistance cannot be obtained. On the other hand, when it is above 2.004, polyorganosiloxane having a necessary degree of polymerization cannot be obtained. The degree of polymerication of polyorganopolysiloxane (D) is 500 to 10,000, preferably 1,000 to 8,000. When it is below 500, excellent mechanical strength cannot be obtained. On the other hand, when it is above 10,000, it is hard to compose. Incidentally, an end of a molecule chain may be blocked with, for example, hydroxyl group, alkoxy group, trimethylsilyl group, dimethylvinylsilyl group, methylphenylvinylsilyl group, methyldiphenylsilyl group, or the like.

A compounding ratio of the above unmodified organopolysiloxane (D) is 0.1 to 10 parts by mass, preferably 1 to 8 parts by mass, more preferably 1 to 5 parts by mass with respect to 100 parts by mass of a mixture of the thermoplastic elastomer [total amount of (A1) and (B) or total amount of (X) and (B)]. When the ratio of the above unmodified organopolysiloxane (D) is below 0.1 parts by mass, the initial sliding ability tends to be lowered. When it is above 10 parts by mass, molding appearance tends to be inferior.
The above unmodified organopolysiloxane (D) may be subjected to a dynamic heat treatment and kneading under the presence of a crosslinking agent together with a thermoplastic elastomer mixture or may be subjected to dynamic melting and kneading under the presence of a crosslinking agent, followed by another melting and kneading to add. There is no limitation on an addition method.

(E; E1, E2) Mineral oil softener:
Examples of the mineral oil softener (E) used in the present invention include paraffinic, naphthenic, and aromatic mineral oil hydrocarbons, and low-molecular hydrocarbons of polybutene type, polybutadiene type, or the like. Of these, mineral oil hydrocarbons are preferable. One having a weight-average molecular weight of 300 to 2,000, particularly 500 to 1,500 is preferable. Rubber softeners of mineral oil hydrocarbon are generally mixtures of an aromatic ring, a naphthenic ring, and paraffinic chain, and classified into a paraffinic oil in which 50% or more of the whole carbon number is the carbon number of the paraffinic chain, a naphthenic oil in which 30 to 45% or more of the whole carbon number is the carbon number of naphthenic ring, and an aromatic oil in which 30% or more of the whole carbon number is the carbon number of the aromatic ring. In the present invention, a paraffinic oil is preferable, and a hydrogenated paraffinic oil is particularly preferable. A mineral oil hydrocarbon has a kinematic viscosity of preferable 20 to 800 cSt, particularly preferably 50 to 500 cSt, at 40°C, and a pour point of preferably -40 to 0°C, more preferably -30 to 0°C.

Examples of the mineral oil softener on the market include Diana Process Oil PW90, PW100, and PW380 produced by Idemitsu Kosan Co., Ltd.
There is a difference in compounding ratio of the mineral oil softener (E; E1, E2) between the first embodiment and the second embodiment of the present invention.
That is, in the second embodiment, a mineral oil softener (E2) is already contained in the extended rubber (X) as described above. Therefore, the compounding ratio of the mineral oil softener added is less than that of the first embodiment.
A compounding ratio of the mineral oil softener (E1) is 0 to 400 parts by mass, preferably 0 to 350 parts by mass, more preferably 0 to 300 parts by mass with respect to 100 parts by mass of a mixture of the thermoplastic elastomer [total amount of (A1) and (B)]; and o to 300 parts by mass, preferably 0 to 250 parts by mass, more preferably 0 to 200 parts by mass with respect to 100 parts by mass of a mixture of the thermoplastic elastomer [total amount of (X) and (B)].

The mineral oil softener (E) may be added to the EAO copolymer (A) upon polymerization, may be subjected to a dynamic heat treatment and kneading under the presence of a crosslinking agent together with an EAO copolymer (A) and α-olefin resin (B), or may be subjected to dynamic melting and kneading under the presence of a crosslinking agent, followed by another melting and kneading to add. There is no limitation on an addition method.

Crosslinking agent:
In addition, in a thermoplastic elastomer compound of the present invention, a mixture containing atleast the above EAO copolymer (A) and the α-olefin resin (B) among the above (A) to (E) is subjected to a dynamic heat treatment under the presence of a crosslinking agent.
   The crosslinking agent used for the crosslinking is not particularly limited as it is a compound capable of crosslinking at least one of the EAO copolymer (A) and the α-olefin resin (B) or crosslinking the EAO copolymers (A) or the α-olefin resins (B) by a dynamic thermal treatment under the presence of a crosslinking agent at a temperature of the melting point of the α-olefin thermoplastic resin (B) or higher temperature.

A thermoplastic elastomer composition of the present invention can be obtained by subjecting at least the EAO copolymer (A) and the α-olefin resin (B) to dynamic melting and kneading under the presence of a crosslinking agent.
Here, examples of the above crosslinking agent used in the crosslinking include organic peroxides, phenol resin crosslinking agents, sulfur, sulfur compounds, p-quinone, derivatives of p-quinone dioxime, bismaleimide compounds, epoxy compounds, silane compounds, amino resins, polyol crosslinking agents, polyamine, triadine compounds, and metal soap. Particularly, organic peroxides and phenol resin crosslinking agents can preferably be used.

Examples of the above organic peroxides include 1,3-bis(t-butylperoxyisopropyl)benzene, 2,5-dimethyl-2,5-bis[{t-butylperoxy}hexyne-3, 2,5-dimethyl-2,5-bis(t-butylperoxy)hexane-3, 2,5-dimethyl-2,5-bis(t-butylperoxy)hexane, 2,2'-bis(t-butylperoxy)-p-isopropylbenzene, dicumylperoxide, di-t-burylperoxide, t-butylperoxide, p-menthaneperoxide, 1,1-bis(t-butylperoxy)-3,3,5-trimethylcyclohexane, dilauroylperoxide, diacetylperoxide, t-butylperoxybenzoate, 2,4-zichlorobenzoylperoxide, p-chlorobenzoylperoxide, benzoylperoxide, di(t-butylperoxy)perbenzoate, n-butyl-4,4-bis(t-butylperoxy)valerate, and t-butylperoxyisopropylcarbonate. Of these, are preferably used ones having relatively high decomposition temperature, such as 1,3-bis(t-butylperoxyisopropyl)benzene, 2,5-dimethyl-2,5-di(t-butylperoxy)hexyne-3, and 2,5-dimethyl-2,5-di(t-butylperoxy)hexane.
Incidentally, the above organic peroxides may be used alone or in combination of two or more kinds.

Further, when an organic peroxide is used as the above crosslinking agent, a crosslinking reaction can moderately be performed by using an organic peroxide together with a crosslinking auxiliary, and particularly uniform crosslinking can be performed.
Examples of the crosslinking auxiliary include sulfur or sulfur compounds (powdered sulfur, colloid sulfur, settling sulfur, insoluble sulfur, surface-treated sulfur, dipentamethylenethiuramtetrasulfide, etc.), oxime compounds (p-quinoneoxime, p,p'-dibenzoylquinoneoxime, etc.), and multifunctional monomers (ethyleneglycol(meth)acrylate, diethyleneglycoldi(meth)acrylate, triethyleneglycoldi(meth)acrylate,tetraethylene glycoldi(meth)acrylate, polyethyleneglycoldi(meth)acrylate, trimethylolpropanetri(meth)acrylate, diallylphthalate, tetraallyloxyethane, triallylcyanurate, N,N'-m-phenylenebismaleimide, N,N'-toluylenebismaleimide, maleic anhydride, divinylbenzene, zinc di(meth)acrylate, etc.). Of these, p,p'-dibenzoylquinoneoxime, N,N'-m-phenylenebismaleimide, and divinylbenzene are particularly preferably used.
These crosslinking auxiliaries may be used alone or in combination of two or more kinds.
Incidentally, since N,N'-m-phenylenebismaleimide among these crosslinking auxiliaries has a function as a crosslinking agent, it can be used as a crosslinking agent.

When an organic peroxide is used as the above crosslinking agent, the amount is 0.05 to 10 parts by mass, preferably 0.1 to 5 parts by mass, with respect to 100 parts by mass of the total amount of the above (A) and (B) components. When the amount of the organic peroxide used is below 0.05 parts by mass, the degree of crosslinking is insufficient, and rubber elasticity and mechanical strength of the resultant thermoplastic elastomer composition may be lowered. On the other hand, when it is above 10 parts by mass, the degree of crosslinking becomes excessively high, which may cause deterioration in molding processability and mechanical strength.
In addition, the amount of a crosslinking auxiliary in the case of using an organic peroxide as the above crosslinking agent is preferably 10 parts by mass or less, more preferably 0.2 to 5 parts by mass, with respect to 100 parts by mass of the total amount of the above (A) and (B) components. When the amount of the crosslinking auxiliary used is above 10 parts by mass, the degree of crosslinking becomes excessively high, which may cause deterioration in molding processability and mechanical strength.

Examples of the above phenol type crosslinking agent include p-substituted phenol type compositions shown by the following general formula (I), o-substituted phenolaldehyde condensate, m-substituted phenolaldehyde condensate, and bromoalkylphenolaldehyde. Of these, p-substituted phenol type compositions are particularly preferably used.

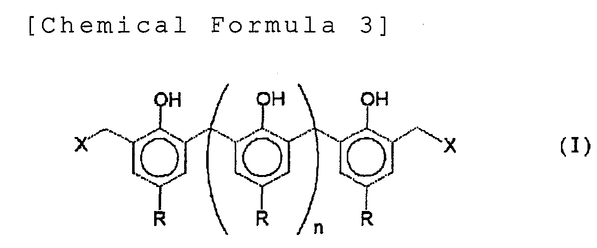

Incidentally, n represents an integer of 0 to 10, X represents at least one of a hydroxyl group, a halogenated alkyl group, and a halogen atom, and R represents a saturated hydrocarbon group having 1 to 15 carbon atoms.

Incidentally, p-substituted phenol type compositions can be obtained by a condensation reaction of p-substituted phenol with aldehyde (preferably formaldehyde) under the presence of an alkali catalyst. When a phenol-type crosslinking agent is used as the above crosslinking agent, the amount is preferably 0.2 to 10 parts by mass, more preferably 0.5 to 5 parts by mass, with respect to 100 parts by mass of the total amount of the above (A) to (C) components and/or the above (A) to (D) components. When the amount of the organic peroxide used is below 0.2 parts by mass, the degree of crosslinking is insufficient, and rubber elasticity and mechanical strength of the resultant thermoplastic elastomer composition may be lowered. On the other hand, when it is above 10 parts by mass, deterioration in molding processability and mechanical strength may by caused in the resultant thermoplastic elastomer composition.

Though these phenol type crosslinking agents may be used alone, a crosslinking accelerator may be used together in order to adjust crosslinking speed. Examples of the crosslinking accelerator include metal halides (such as stannous chloride and ferric chloride), organic halides (chlorinated polypropylene, butyl bromide rubber, and chloroprene rubber). It is more desirable to use a metal oxide such as zinc oxide or a dispersant such as stearic acid besides the crosslinking accelerator.

Crosslinking auxiliary:
Examples of the above crosslinking auxiliary include sulfur or sulfur compounds such as powdered sulfur, colloid sulfur, settling sulfur, insoluble sulfur, surface-treated sulfur, and dipentamethylenethiuramtetrasulfide; oxime compounds such as p-quinoneoxime and p,p'-dibenzoylquinoneoxime; multifunctional monomers such as ethyleneglycol(meth)acrylate, diethyleneglycoldi(meth)acrylate, triethyleneglycoldi(meth)acrylate, tetraethyleneglycoldi(meth)acrylate, 1,4-butanediol(meth)acrylate, 1,6-hexanedioldi(meth)acrylate, 1,9-nonanedioldi(meth)acrylate, glycerindi(meth)acrylate, polyethyleneglycol(PEG#200)di(meth)acrylate, polyethyleneglycol(PEG#400)di(meth)acrylate, polyethyleneglycol(PEG#600)di(meth)acrylate, trimethylolpropanetri(meth)acrylate, pentaerythritoltri(meth)acrylate, dipentaerythritolhexa(meth)acrylate, neopentylglycoldi(meth)acrylate, diallylphthalate, tetraallyloxyethane, triallylisocyanurate, N,N'-m-phenylenebismaleimide, N,N'-toluylenebismaleimide, maleic anhydride, divinylbenzene, 2,4,5-trimercapto-S-triadine, and isocyanuric acid; and metal compounds such as zinc methacrylate, magnesium methacrylate, zinc dimethacrylate, and magnesium dimethacrylate. Of these crosslinking auxiliaries, p,p'-dibenzoylquinoneoxime, N,N'-m-phenylenebismaleimide, trimethylolpropanetri(meth)acrylate, and divinylbenzene are preferable.
These crosslinking auxiliaries may be used alone or in combination of two or more kinds.

Various additives (1):
This thermoplastic elastomer compound may contain a high-molecular weight compound or various additives selected from the following thermoplastic resins and rubbers at an amount of not hindering mechanical strength, flexibility, or moldability of the resultant product of the present invention.

As such a high-molecular weight compound, various kinds may be used without particular limitation. Examples of the high-molecular weight compound include ionomer, aminoacrylamide polymer, polyethylene and maleic anhydride-grafted polymer thereof, polyisobutylene, ethylene-vinyl chloride polymer, ethylene-vinyl alcohol polymer, ethylene-vinyl acetate copolymer, polyethylene oxide, ethylene-acrylic acid copolymer, polypropylene and maleic anhydride-grafted polymer thereof, atacticpoly-1-butene homopolymer, a copolymer of α-olefin copolymer resin (propylene (content of 50 mol% or more) with another α-olefins (ethylene, 1-butene, 1-pentene, 1-hexene, 4-methyl-1-pentene, 1-octene, or 1-decene); and copolymers of 1-butene (content of 50 mol% or more) with another α-olefins (ethylene, propylene, 1-pentene, 1-hexene, 4-methyl-1-pentene, 1-octene, or 1-decene; polyisobutylene and maleic anhydride-grafted polymer thereof, chlorinated polypropylene, 4-methylpentene, polystyrene, ABS resin, ACS resin, AES resin, ASA resin, MBS resin, acrylic resin, methacrylic resin, vinyl chloride resin, vinylidene chloride resin, polyamide resin, polycarbonate resin, acrylic resin, methacrylic resin, vinyl chloride resin, vinylidene chloride resin, vinyl alcohol resin, vinyl acetal resin, methylmethacrylate resin, fluororesin, polyether resin, poly(ethyleneterephthalate), poly(acrylic ester) polyamide resin, ethylene/α-olefin copolymeric rubber rubber and maleic anhydride-grafted polymer thereof, ethylene/α-olefin/non-conjugate diene copolymer rubber, styrene/butadiene rubber and hydrogenation product thereof, maleic anhydride-grafted polymer of hydrogenation product of styrene/butadiene rubber, butadiene rubber and hydrogenation product thereof, maleic anhydride-grafted polymer of hydrogenation product of butadiene rubber, polyisobutylene-isoprene copolymer, isoprene rubber and hydrogenation product thereof, maleic anhydride-grafted polymer of hydrogenation product of isoprene rubber, styrene/isopropylene rubber and hydrogenation product thereof, maleic anhydride-grafted polymer of hydrogenation product of styrene/isoprene rubber, nitrile rubber and hydrogenation product thereof, acrylic rubber, silicone rubber, fluororubber, butyl rubber, natural rubber, chlorinated polyethylene type thermoplastic elastomer, syndiotactic-1,2-polybutadiene, hydrogenation product of styrene/butadiene block copolymer, hydrogenation product of styrene/isoprene conjugated diene block copolymer, simple blend type thermoplastic olefin elastomer, implant type thermoplastic olefin elastomer, kinematic crosslinking type thermoplastic olefin elastomer, thermoplastic polyvinyl chloride elastomer, thermoplastic polyurethane elastomer, thermoplastic polyester elastomer, thermoplastic polyamide elastomer, and thermoplastic fluorine elastomer. Particularly, polypropylene and crystalline/noncrystalline α-olefin copolymers such as propylene/butane-1copolymer resin are preferable.

These high-molecular weight compounds may be used alone or in combination of two or more kinds.
An amount of the high-molecular weight compound is 300 parts by mass or less, preferably 1 to 200 parts by mass, with respect to 100 parts by mass of the thermoplastic elastomer composition of the present invention.

Various additives (2):
As various additives, there may further be contained, for example, antioxidant; antistatic agent; blocking agent; sealability improver; lubricant; antiaging agent; stabilizers such as heat stabilizer, weather resistant, metal deactivator, ultraviolet absorber, light stabilizer, and copper harm inhibitor; bactericidal and fungicidal agent, dispersing agent, plasticizer, nucleating agent for crystallization, flame retardant, tackifiers, foaming aid; coloring agents such as titanium oxide and carbon black; pigment, metal powder such as ferrite powder; inorganic fibers such as glass fiber and metal fiber; organic fibers such as carbon fiber and aramid fiber; composite fiber; inorganic whiskers such as potassium titanate whiskers; fillers such as glass beads, glass balloon, glass flake, asbestos, mica, calcium carbonate, talc, wet silica, dry silica, alumina silica, calcium silicate, hydrotalcite, kaolin, diatomaceous earth, graphite, ebonite, powder, cotton flock, cork powder, barium sulfate, fluoroplastic and polymer beads.

Method for preparing thermoplastic elastomer composition:
A thermoplastic elastomer composition of the present invention can be obtained by mixing at least (A1) and(X) components and (B) component, generally (A1) to (E1) components or (X) to (E1) components together, and supplying the mixture to a continuous or closed type melt-kneader for a dynamic heat treatment under the presence of a crosslinking agent as described above.

Here, the above "dynamic heat treatment" means both applying shear force and heating. The dynamic heat treatment can be performed by the use of, for example, a melt-kneading apparatus. The treatment with a melt-kneading apparatus may be a batch type or a continuous type.
Examples of the apparatus capable of performing melt-kneading include an open mixing roll, a close Banbury mixer, a monoaxial extruder, a biaxial extruder, a continuous extruder, and a pressure kneader. Of these, continuous type apparatuses (a monoaxial extruder, a biaxial extruder, and a continuous extruder) may preferably be used from the viewpoint of economical efficiency and treatment efficiency.

Though the above continuous type apparatus is not particularly limited as long as it can melt-knead under the presence of the above thermoplastic elastomer composition, a biaxial extruder is preferably used, and further a biaxial extruder having L/D (ratio of the screw effective length L to the outer diameter D) of 30 or more, more preferably 36 to 60. As the biaxial extruder, any of the biaxial extruders where two screws are in gear or out of gear can be used. However, one having two screws in gear with the same rotation direction is more preferable.

Examples of such a biaxial extruder include PCM produced by Ikegai Co., KTX produced by Kobe Steel, Ltd., TEX produced by The Japan Steel Works, Ltd., TEM produced by Toshiba Machine Co., Ltd., ZSK produced by Warner Co. (All of them are trade names).
The above continuous kneader preferably has L/D (ratio of the screw effective length L to the outer diameter D) of 5 or more, more preferably 10. As the continuous kneader, any of the continuous kneaders where two screws are in gear or out of gear can be used. However, one having two screws in gear with the different rotation direction is more preferable. Examples of such a continuous kneader include MIXTRON KTX·LCM·NCM produced by Kobe Steel, Ltd., and CIM·CMP produced by The Japan Steel Works, Ltd. (both are trade names).
Further, two or more continuous type apparatuses may be used in combination.

A treatment temperature of a dynamic heat treatment is 120 to 350°C, preferably 150 to 290°C, and the treatment time is 20 sec. to 320 min., preferably 30 sec. to 25 min. In addition, the shear force applied to the mixture is a shear rate of 10 to 20,000/sec., preferably 100 to 10,000/sec.

Thermoplastic elastomer composition molded article:
A method for forming a thermoplastic elastomer composition molded article is not particularly limited, and there can suitably be employed, for example, extrusion molding, calender molding, solvent casting, injection molding, vacuum molding, powder slash molding, and heat pressing.
There may also be employed a molded article produced by laminating or bonding rubber, plastic, a thermoplastic elastomer composition other than that of the present invention, glass, metal, fabric, and wood.

Examples of the rubber include ethylene/α-olefin copolymeric rubber rubber and maleic anhydride-grafted polymer thereof, ethylene/α-olefin/ non-conjugate diene copolymer rubber, styrene/butadiene rubber, Ni catalyst polymerized butadiene rubber, isoprene rubber, nitrile rubber, and hydrogenation product thereof, acrylic rubber, silicone rubber, fluororubber, butyl rubber, and natural rubber.

Examples of the plastic include ionomer, aminoacrylamide polymer, polyethylene and maleic anhydride-grafted polymer thereof, polyisobutylene, ethylene-vinyl chloride polymer, ethylene-vinyl alcohol polymer, ethylene-vinyl acetate copolymer, polyethylene oxide, ethylene-acrylic acid copolymer, polypropylene and maleic anhydride-grafted polymer thereof, polyisobutylene and maleic anhydride-grafted polymer thereof, chlorinated polypropylene, 4-methylpentene, polystyrene, ABS resin, ACS resin, AES resin, ASA resin, MBS resin, acrylic resin, methacrylic resin, vinyl chloride resin, vinylidene chloride resin, polyamide resin, polycarbonate resin, acrylic resin, methacrylic resin, vinyl chloride resin, vinylidene chloride resin, vinyl alcohol resin, vinyl acetal resin, methylmethacrylate resin, fluororesin, polyether resin, poly(ethyleneterephthalate), poly(acrylic ester) polyamide resin, polyurethane, polyimide, polyurea resin, epoxy resin, phenol resin, urea resin, polybutene-1,methylpentene resin, and polyacrylonitrile.

Examples of the thermoplastic elastomer include chlorinated polyethylene type thermoplastic elastomer, syndiotactic-1,2-polybutadiene, simple blend type thermoplastic olefin elastomer, implant type thermoplastic olefin elastomer, kinematic crosslinking type thermoplastic olefin elastomer, thermoplastic polyvinyl chloride elastomer, thermoplastic polyurethane elastomer, thermoplastic polyester elastomer, thermoplastic polyamide elastomer, and thermoplastic fluorine elastomer, hydrogenation product of styrene/butadiene rubber, maleic anhydride-grafted polymer of hydrogenation product of styrene/butadiene rubber, hydrogenation product of butadiene rubber, maleic anhydride-grafted polymer of hydrogenation product of butadiene rubber, hydrogenation product of isoprene rubber, maleic anhydride-grafted polymer of hydrogenation product of isoprene rubber, hydrogenation product of stylene/isoprene rubber, maleic anhydride-grafted polymer of hydrogenation product of stylene/isoprene rubber, hydrogenation product of styrene/butadiene block copolymer, and hydrogenation product of styrene/isoprene block copolymer.
Examples of the metals include stainless steel, aluminum, iron, copper, nickel, zinc, tin, or alloys such as a nickel-zinc alloy, an iron-zinc alloy, and a lead-tin alloy.

### Example

The present invention will hereinbelow described more concretely with Examples. However, the present invention is by no means limited to the following Examples as long as it is without the range of the gist.
Measurement for various evaluation in the Examples were conducted according to the methods shown below.

Evaluation of thermoplastic elastomer:
Flowability of the resultant thermoplastic elastomer compositions were measured at 230°C under a load of 49N based on JIS K7210 as a melt flow rate. Incidentally, with regard to the thermoplastic compositions where an accurate value cannot be obtained because flowability is too high at 230°C under a load of 49N, measurement was performed at 190°C under a load of 21N.
Each of injection molding sheets of the resultant thermoplastic elastomer was evaluated for molding appearance, hardness, tensile breaking strength, tensile breaking elongation, compression set, coefficient of kinematic friction, and a bleeding test by the following methods. The results of the evaluations are shown in Table 1.

Molding appearance:
The surface of each of the molded articles was visually observed, and the results are shown in Table 1.
Incidentally, "good" and "bad" in Table 1 are given by the following evaluation standard.
Good: even surface and no flow mark or the like
Bad: flow mark or the like and uneven surface
Hardness:
Hardness was measured as an index of flexibility on the basis of JIS K6253. Tensile breaking strength and tensile breaking elongation:
   They were measured on the basis of JIS K6251.
Compression set:
Compression set was measured as an index of rubber elasticity under the conditions of 70°C for 22 hours on the basis of JIS K6262.

Coefficient of kinematic friction:
Coefficient of kinematic friction was measured as an index of initial sliding ability and durable sliding ability. A coefficient of kinematic friction of a test piece (length of 110 mm, width of 61 mm, and thickness of 2 mm) made of a thermoplastic elastomer composition against a cylindrical glass ring test piece having an outer diameter of 25.7 mm, an inner diameter of 20 mm, a height of 16.5 mm, and a weight of 9.6 g under a load of 233 g/3 cm² (surface pressure 78 g/cm²) with a sliding speed of the glass ring test piece of 100 mm/min (1 stroke = 50 mm) using a reciprocating sliding tester (produced by Tosoku Seimitsu Co. As the thermoplastic elastomer composition test piece, one left for one day after injection molding was used, and the measurement was performed at room temperature. In addition, as the durable sliding ability, a coefficient of kinematic friction upon 1000^{th} reciprocated sliding of the glass ring was measured.

Bleeding test:
A test piece having a rectangular shape with 40 mm in length and 30 mm in width was punched out from each of the above sheets. After the test piece was statically left for 168 hours in a thermostatic chamber at 50°C, the appearance of the molded surface was observed visually and tactually to see if there is no bleeding of liquid and/or solid. The results are shown in Table 1.
Incidentally, "good" and "bad" in Table 1 are given by the following evaluation standard.
Good: no bleeding
Bad: some bleeding

Injection weldability of thermoplastic elastomer composition to vulcanized EPDM:
The test piece having an injection-welded thermoplastic elastomer comopsition was used and folded to form an angle of 180°at the joint between the thermoplastic elastomer composition and the vulcanized EPDM. Peeling condition of the test piece was visually observed, and the results are shown in Table 1.
Incidentally, "good" and "bad" in Table 1 are given by the following evaluation standard.
Good: no peeding
Bad: some peeding leading to breakage

With regard to the above evaluations, test pieces were produced by the following method. That is, test pieces were prepared by subjecting the thermoplastic elastomer composition obtained as described above to injection molding to give a size of 120×120×2 mm by an injection-molding machine (N-100 produced by The Japan Steel Works, Ltd.).

In addition, the above injection weldability, a olefin-based vulcanized rubber body to which the thermoplastic elastomer composition was welded was prepared and subjected to the test.
There was obtained a mixture prepared by blending 145 parts by mass of carbon black (trade name of "SEAST 116" produced by Tokai Carbon Co., Ltd.), paraffin-based process oil (trade name of "PW380" produced by Idemitsu Kosan Co., Ltd., 5 parts by mass of active zinc flower (produced by Sakai Chemical Industry Co., Ltd.), 1 part by mass of a stearic acid (produced by Asahi Denka Co., Ltd., 1 part by mass of processing auxiliary (trade name of "Hitanol 1501" produced by Hitachi Chemical Co., Ltd.), 2 part by mass of a mold release (trade name of "Struktol WB212" produced by Sil and Zailaher Co., Ltd.), and 1 parts by mass of a plasticizer (polyethyleneglycol) with respect to 100 parts by mass of ethylene/propylene/5-ethylidene-2-norbornene terpolymer (ethylene content of 72 mol%, propylene content of 28 mol%, Mooney viscosity of 92, iodine value of 15, trade name of "EP 103A" produced by JSR).

The mixture was kneaded under the conditions of 50°C, 70 rpm, for 2.5 minutes. Then, 10 parts by mass of a dehydrating agent (trade name "Besta P P" produced by Inoue Sekkai Industry Co., Ltd.)and vulcanization accelerator(1 part by mass of "M1" (trade name), 1 part by mass of "PX" (trade name), 0.5 part by mass of "TT" (trade name), and 1 part by mass of "D1" (trade name) all produced by Ohuchi Shinko Chemical Industries., Ltd.), and 2.2 parts by mass of sulfur to the mixture, and the mixture was kneaded by the use of an open roll at 50°C. Then, vulcanization was performed at 170°C for 10 min. to obtain a vulcanized rubber sheet having the size of 120 mm², and a thickness of 2 mm. The sheet was punched by a dumbbell cutter to obtain a body having a length of 60 mm and a width of 50 mm.

### Examples 1 to 7, Comparative Examples 1 to 4 (Preparation of thermoplastic elastomer composition)

The following EAO copolymer (A) or extended rubber (X), thermoplastic olefin resin (B), an unmodified organopolysiloxane (C), a viny-terminated organopolysiloxane (D), a mineral oil softener (E), and other additives were put in a pressure kneader heated up to 150°C in advance to give compounding ratios shown in Table 1, and they were kneaded for 15 min. at 40 rpm (shear rate of 200/sec.) till each component dispersed uniformly.
The resultant composition in a molten state was pelletized with a feeder ruder (produced by Moriyama Co.).

To the obtained pellet was added a crosslinking agent shown below at the ratio shown in Table 1, and they were mixed by a Henshell mixer to give a mixture. Then, the mixture was extruded with being subjected to a dynamic heat treatment at 200°C for a retention period of one and half minutes at 300 rpm (shear rate of 400/sec) using a biaxial extruder (type "PCM45" produced by Ikegai Co., whose screws are completely in-gear in the same direction, and screw flight portion has a ratio of a length L to a diameter D (L/D) of 33.5.) to give a pellet shaped thermoplastic elastomer composition.

### (1) EAO copolymer (A) or extended rubber (X)

EAO copolymer (1): ethylene/propylene/5-ethylidene-2-norbornene terpolymer , ethylene content of 66% by mass, 5-ethylidene-2-norbornene content of 4.5% by mass, critical viscosity 2.7 (dl/g)
Extended copolymer (2):
ethylene/propylene/5-ethylidene-2-norbornene terpolymer , ethylene content of 66% by mass, 5-ethylidene-2-norbornene content of 4.5% by mass, critical viscosity 5.5 (dl/g), paraffinic oil based softener content of 50% by mass
Extended copolymer (3):
ethylene/propylene/5-ethylidene-2-norbornene terpolymer , ethylene content of 66% by mass, 5-ethylidene-2-norbornene content of 4.5% by mass, critical viscosity 4.6 (dl/g), paraffinic oil based softener content of 50% by mass

### (2) α-olefin resin (B)

Polyolefin resin (B1);
Polypropylene (propylene/ethylene random copolymer), density of 0.90 g/cm³, MFR (temperature of 230°C, load of 21N) 23 g/10 min., product by Japan Polychem Corporation, product name (trade name of "Novatec FL25R" Polyolefin resin (B2);
Propylene/1-butene amorphous copolymer, propylene content of 71 mol%, melt viscosity of 8000 cPs, density of 0.87 g/cm³, Mn6500, product by Ube Rexene co., trade name "UBETAC APA O UT 2880"

### (3) Unmodified polydimethylsiloxane (C)

(C-1): Unmodified polydimethylsiloxane having a viscosity of 100 cSt, trade name "Silicone oil SH-200", product by Dow Corning Toray Silicone Co., Ltd.
(C-2): Unmodified polydimethylsiloxane having a viscosity of 1,000 cSt, trade name "Silicone oil SH-200", product by Dow Corning Toray Silicone Co., Ltd.
(C-3): Unmodified polydimethylsiloxane having a viscosity of 12,500 cSt, trade name "Silicone oil SH-200", product by Dow Corning Toray Silicone Co., Ltd.
(C-4): Unmodified polydimethylsiloxane having a high molecular weight and a viscosity of 1,000,000 cSt or more, trade name "By16-140", product by Dow Corning Toray Silicone Co., Ltd.

### (4) Viny-terminated organopolysiloxane (D)

A mixture of methylvinylpolysiloxane having a polymerization degree of about 7000, which contains 99.85 mol% of dimethyl siloxane unit and 0.15 mol% or methylvinyl siloxane and where both ends of a molecule chain are blocked with dimethylvinylsiloxane, and 40 parts by mass of aerosol type dry silica (produced by Japan Aerojil Co., trade name of "Aerojil 200"); trade name of "TSE221-5U", product by GE Toshiba Silicones Co., Ltd.

### (5) Mineral oil softener

Paraffinic oil based softener : Trade name of "Diana process oil PW90", products by Idemitsu Kosan Co., Ltd.

### (6) Other additives

Higher fatty acid amide: Oleamide, product by Kao Corporation.
Crosslinking agent: 5-dimethyl-2,5-di(t-butylperoxy)hexane, product by NOF Corp., trade name of "Perhexa 25B-40".
Crosslinking auxiliary 1: Divinylbenzene, purity of 55%, product by Sankyo Chemical Industries, Ltd.
Crosslinking auxiliary 2: N'N-m-phenylenebismaleimide, Vulnoc PM, product by Ohuchi Shinko Chemical Industries., Ltd.
Antiaging agent: Product by Ciba Specialty Chemicals K.K., tradename of "Irganox 1010"
Black pigment: Mixture of carbon black and crystalline polypropylene (carbon black content of 30%), product by Dainichiseika Color & Chemicals Mfg. CO., Ltd., trade name of "PP-M77255".

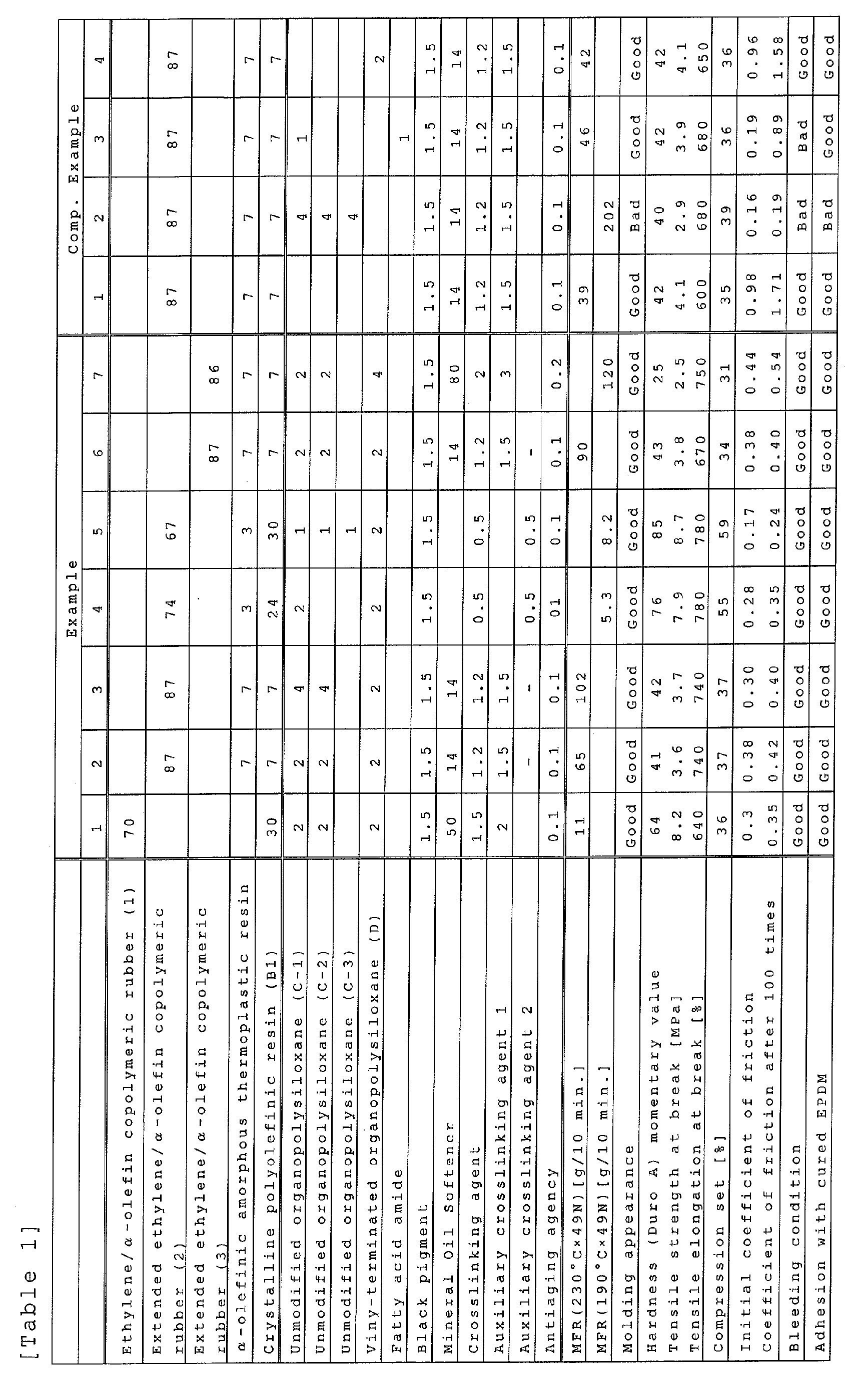

As is obvious from the result shown in Table 1, it is understood that Examples 1 to 7 has excellent molding appearance, mechanical strength, flexibility, rubber elasticity, injection weldability, and durable sliding ability.
In contrast, Comparative Example 1 is inferior in abrasion resistance (durable sliding ability), and Comparative Example 2 had a pattern on a surface of a molded article, and therefore it is inferior in molding appearance. In addition, unmodified organopolysiloxane bled out on the surface of the molded article from the time before the bleeding test. Further, since unmodified organopolysiloxane bled out, it is inferior in thermal weldability with vulcanized EPDM.
In Comparative Example 3, higher fatty acid amid bled out, and therefore, a surface of the molding article is whitened. Though the initial sliding ability was good, abrasion resistance (durable sliding ability) is inferior.
Comparative Example 4 is inferior in abrasion resistance (durable sliding ability). Industrial Applicability

Since a thermoplastic elastomer composition and a molded article thereof of the present invention are excellent in flexibility, rubber elasticity (impact resilience, compression set), they can be used extensively in automotive applicants such as bumper, mall as exterior trim, gasket for wind shielding, gasket for door shielding, gasket for trunk sealing, roof side rail, emblem, inner panel, door trim, skin material for inner or outer trim (e.g., console box), weather strip and the like; mar-resistant leather sheet; aircraft and ship applications such as sealing material, skin material for inner or outer trim, and the like; civil engineering and construction applications such as sealing material, skin material for inner or outer trim, water-proof sheet, and the like; general machinery and equipment applications such as sealing material and the like; light electric appliance and water supply applications such as packing, sealing material in a fuel cell stack, skin material, housing and the like; orbit pad for a railway; roll and cleaning blade for information appliances; film for electronic parts; flat panel display (FPD) for semiconductor apparatus, sealing material; protective film for image (e.g., picture); decorative film for construction material; part for medical instruments; electric wire; ordinary processed products such as daily sundry, sporting goods and the like.

## Claims

1. A thermoplastic elastomer composition comprising:
40 to 99 parts by mass of an ethylene/α-olefin copolymeric rubber (A1), and
1 to 60 parts by mass of a thermoplastic α-olefin resin (B) comprising a α-olefinic crystalline thermoplastic resin (B1) and/or a α -olefinic amorphous thermoplastic resin (B2), provided that a total amount of (A1) and (B) is 100 parts by mass; and
0.1 to 10 parts by mass of an unmodified organopolysiloxane (C),
0.1 to 10 parts by mass of a viny-terminated organopolysiloxane (D), and
0 to 400 parts by mass of a mineral oil softener (E1), to 100 parts by mass of a mixture of (A1) and (B).

2. A thermoplastic elastomer composition according to Claim 1, wherein at least the ethylene/α-olefin copolymeric rubber (A1) and the thermoplastic α-olefin resin (B) are subjected to a dynamic heat treatment under the presence of a crosslinking agent.

3. A thermoplastic elastomer composition according to Claim 1 or 2, wherein the ethylene/α-olefin copolymeric rubber (A1) has a critical viscosity [η] of 3.5 to 6.8 dl/g when it is measured at 135°C in a decalin solvent.

4. A thermoplastic elastomer composition comprising:
40 to 99 parts by mass of an extended rubber (X) comprising 20 to 80% by mass of an ethylene/α-olefin copolymeric rubber (A2) and 20 to 80% by mass of a mineral oil softener (E2), provided that total of (A2) + (E2) is 100% by mass; and
1 to 60 parts by mass of a thermoplastic α-olefin resin (B) comprising a α-olefinic crystalline thermoplastic resin (B1) and/or a α -olefinic amorphous thermoplastic resin (B2),
Provided that total of a mixture of (X) and (B) is 100 parts by mass; and
0.1 to 10 parts by mass of an unmodified organopolysiloxane (C),
0.1 to 10 parts by mass of a viny-terminated organopolysiloxane (D), and
0 to 300 parts by mass of a mineral oil softener (E1), to 100 parts by mass of the mixture of (X) and (B).

5. A thermoplastic elastomer composition according to Claim 4, wherein at least the extended rubber (X) and the thermoplastic α-olefin resin (B) are subjected to a dynamic heat treatment under the presence of a crosslinking agent.

6. A thermoplastic elastomer composition according to Claim 4 or 5, wherein the ethylene/α-olefin copolymeric rubber (A2) has a critical viscosity [η] of 3.5 to 6.8 dl/g when it is measured at 135°C in a decalin solvent.

7. A thermoplastic elastomer composition according to any one of Claims 1 to 6, wherein the unmodified organopolysiloxane (C) has a viscosity of below 100,000 cSt when it is measured at 25°C based on JIS K2283.

8. A thermoplastic elastomer composition according to any one of Claims 1 to 7, wherein the viny-terminated organopolysiloxane (D) is an organopolysiloxane having a polymerization degree of 500 to 10,000 and represented by the following average composition formula (1):
RₐSiO_{(4-a)/2}
where R represents a substituted or unsubstituted mono-valent organic group, 0.02 to 10 mol% of R is a vinyl group, and a is a number within the range from 1.900 to 2.004.

9. A molded article produced by subjecting a thermoplastic elastomer composition according to any one of Claims 1 to 8 to injection molding.

10. A weather strip produced by subjecting a thermoplastic elastomer composition according to any one of Claims 1 to 8 to injection molding.

## Amended claims

### Amended claims under Art. 19.1 PCT

**1.** (Amended) A thermoplastic elastomer composition comprising:
40 to 90 parts by mass of an ethylene/α-olefin copolymeric rubber (A1), and
1 to 60 parts by mass of a thermoplastic α-olefin resin (B) comprising a α-olefinic crystalline thermoplastic resin (B1) and/or a α-olefinic amorphous thermoplastic resin (B2),
wherein, with respect to 100 parts by mass of a mixture of (A1) and (B), are incorporated in the mixture:
0.1 to 10 parts by mass of an unmodified organopolysiloxane (C) having a viscosity of less than 100,000 cSt at 25°C prescribed by JIS K2283,
0.1 to 10 parts by mass of a viny-terminated organopolysiloxane (D), and
0 to 400 parts by mass of a mineral oil softener (E1)
and not containing a hydrosilylation catalyst.

**2.** A thermoplastic elastomer composition according to Claim 1, wherein at least the ethylene/α-olefin copolymeric rubber (A1) and the thermoplastic α-olefin resin (B) are subjected to a dynamic heat treatment under the presence of a crosslinking agent.

**3.** A thermoplastic elastomer composition according to Claim 1 or 2, wherein the ethylene/α-olefin copolymeric rubber (A1) has a limiting viscosity [η] of 3.5 to 6.8 dl/g when it is measured at 135°C in a decalin solvent.

**4.** (Amended) A thermoplastic elastomer composition comprising:
40 to 99 parts by mass of an extended rubber (X) comprising 20 to 80% by mass of an ethylene/α-olefin copolymeric rubber (A2) and 20 to 80% by mass of a mineral oil softener (E2), where (A2) + (E2) = 100% by mass, and
1 to 60 parts by mass of a thermoplastic α-olefin resin (B) comprising a α-olefinic crystalline thermoplastic resin (B1) and/or a α-olefinic amorphous thermoplastic resin (B2),
wherein, with respect to 100 parts by mass of a mixture of (X) and (B), are incorporated in the mixture:
0.1 to 10 parts by mass of an unmodified organopolysiloxane (C) having a viscosity of less than 100,000 cSt at 25°C prescribed by JIS K2283,
0.1 to 10 parts by mass of a viny-terminated organopolysiloxane (D), and
0 to 400 parts by mass of a mineral oil softener (E1)
and not containing a hydrosilylation catalyst.

**5.** A thermoplastic elastomer composition according to Claim 4, wherein at least the extended rubber (X) and the thermoplastic α-olefin resin (B) are subjected to a dynamic heat treatment under the presence of a crosslinking agent.

**6.** A thermoplastic elastomer composition according to Claim 4 or 5, wherein the ethylene/ α-olefin copolymeric rubber (A1) has a limiting viscosity [η] of 3.5 to 6.8 dl/g when it is measured at 135°C in a decalin solvent.

**7.** (Deleted)

**8.** A thermoplastic elastomer composition according to any one of Claims 1 to 7, wherein the viny-terminated organopolysiloxane (D) is an organopolysiloxane having a polymerization degree of 500 to 10,000 and represented by the following average composition formula (1):
RₐSiO_{(4-a)/2}
where R represents a substituted or unsubstituted mono-valent organic group, 0.02 to 10 mol% of R is a vinyl group, and a is a number within the range from 1.900 to 2.004.

**9.** A molded article produced by subjecting a thermoplastic elastomer composition according to any one of Claims 1 to 8 to injection molding.

**10.** A weather strip produced by subjecting a thermoplastic elastomer composition according to any one of Claims 1 to 8 to injection molding.
